# EUROPEAN PATENT APPLICATION

(11) **EP 2 600 546 A1**
(43) Date of publication of application: **05.06.2013**
(21) Application number: 11306605.4
(22) Date of filing: 02.12.2011
(51) Int. Cl.: H04J 3/06, H04J 3/16

(54) **Method and Related Network Element Providing Delay Measurement in an Optical Transport Network**

(71) Applicant: Alcatel Lucent, 75007 Paris (FR)
(72) Inventor: Loehr, Juergen, 70190 Stuttgart (DE); Sturm, Wolfram, 90562 Heroldsberg (DE)
(74) Representative: Urlichs, Stefan

(57) **Abstract**

A delay measurement method of a path (P) or path segment through a transport network and a corresponding network nodes (NE1, NE2) for performing the delay measurement are described, which provide a higher precision and lower jitter. An originating network node (NE1) inserts a delay measurement request signal (REQ) into an overhead subfield of a first data unit and transmits the first data unit over the path (P) or path segment to a far-end network node (NE2) as part of framed transport signals. The far-end network node (NE2), upon detection of the delay measurement request (REQ), inserts a delay measurement reply signal (REP) into an overhead subfield of a second data unit and transmits the second data unit back to the originating network node (NE1) using framed transport signals in reverse direction. The originating network node (NE1) determines a time difference between insertion of the delay measurement request signal (REQ) and receipt of the delay measurement reply signal (REP). The far-end network node (NE2) further determines an insertion time value indicative of a time difference (t1, t2, t3) between receipt of the delay measurement request signal (REQ) and insertion of the delay measurement reply signal (REP) in reverse direction and communicates the insertion time value back to the originating network node (NE1). The originating network node (NE1) then determines a delay value for the path (P) or path segment from the determined response time difference and the received insertion time value.

## Description

### Field of the Invention

The present invention relates to the field of telecommunications and more particularly to a method and related network element for providing delay measurement in an optical transport network.

### Background of the Invention

In an optical network, network elements are physically interconnected through optical fiber links. Optical transport signals transmitted over the links are structured into consecutive frames, which repeat with a predefined frame rate.

A connection for the transmission of data signals from end to end through an optical network is referred to as a path and represented by a multiplex unit repeatedly contained in each subsequent frame, such as for example an Optical Data Unit of size k (ODUk) for the Optical Transport Network according to ITU-T G.709. An ODUk has a payload and an overhead portion.

A segment of a path is referred to as a Tandem Connection and exists, when established, for monitoring purposes and has its own Tandem Connection Monitoring (TCM) overhead field in the ODUk overhead.

The ITU recommendation G.709 defines in chapters 15.8.2.1.6 for a path and 15.8.2.2.8 for a path segment a delay measurement using predefined overhead bytes in the ODUk overhead, with separate bits being defined for path delay measurement and for path segment delay measurement. A delay measurement signal consists of a constant value that is inverted at the beginning of a two-way delay measurement test. The new value of the delay measurement signal is maintained until the start of the next delay measurement test.

To carry out a delay measurement, the originating network node inserts the inverted delay measurement signal into a defined subfield of the ODUk overhead and sends it to the far-end network node. The far-end network node upon detection of an inversion of the delay measurement signal in the defined subfield, loops back the inverted delay measurement signal towards the originating network node. The originating network node measures the number of frame periods between the moment the delay measurement signal value is inverted and the moment this inverted delay measurement signal value is received back from the far-end network node.

### Summary of the Invention

According to the delay measurement defined in ITU-T G.709, the delay measurement signal can only be inserted at a specific location within the frame overhead. Since the signals that travel on a bidirectional link in opposite directions are asynchronous and have no fixed phase relationship of their frame phases, the far end node, when it detects a delay measurement signal, has to wait for the specific overhead location until it can invert the delay measurement signal in reverse direction. This causes a low granularity and high jitter of the measured delay value. For an ODU0, this translates into an imprecision of up to 100 µsec, corresponding 20km fiber length. It is hence an object to provide an improved delay measurement with a higher precision and lower jitter.

These and other objects that appear below are achieved by delay measurement method of a path or path segment through a transport network and a corresponding network node for performing the delay measurement. An originating network node inserts a delay measurement request signal into an overhead subfield of a first data unit and transmits the first data unit over the path or path segment to a far-end network node as part of framed transport signals. The far-end network node, upon detection of the delay measurement request, inserts a delay measurement reply signal into an overhead subfield of a second data unit and transmits the second data unit back to the originating network node using framed transport signals in reverse direction. This second data unit represents the backward direction of the same path P, as the first data unit represents the forward direction of the same bidirectional path P. The originating network node determines a time difference between insertion of the delay measurement request signal and receipt of the delay measurement reply signal. The far-end network node further determines an insertion time value indicative of a time difference between receipt of the delay measurement request signal and insertion of the delay measurement reply signal in reverse direction and communicates the insertion time value back to the originating network node. The originating network node then determines a delay value for the path or path segment from the determined response time difference and the received insertion time value.

### Brief Description of the Drawings

Preferred embodiments of the present invention will now be described with reference to the accompanying drawings in which
- figure 1: shows the principle of a loop back delay measurement along a bidirectional path through an optical network;
- figure 2: shows different values for an insertion delay between transport frames in opposite directions; and
- figure 3: shows a block diagram of a network element implementing the delay measurement.

### Detailed Description of the Invention

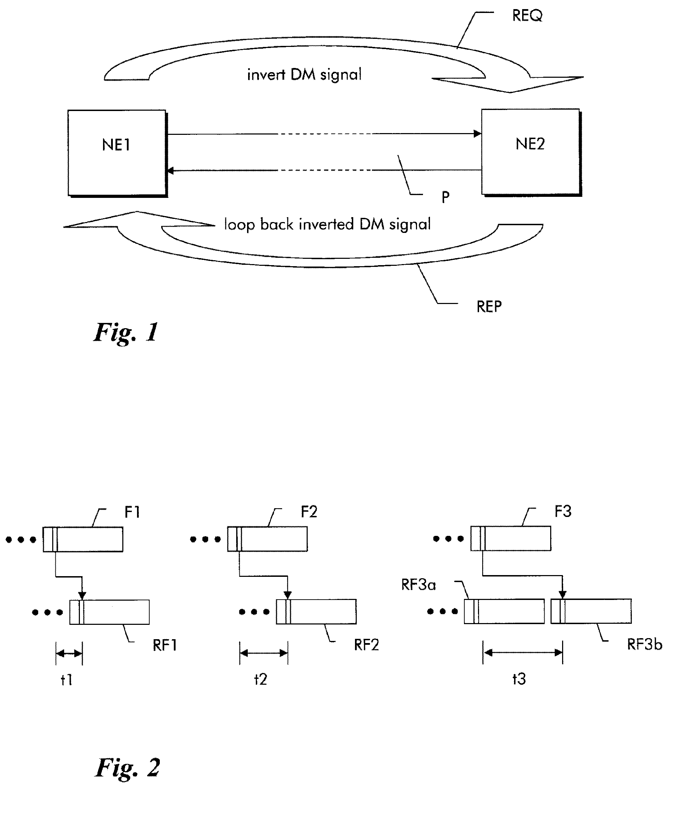

The principle of a loop back delay measurement is shown schematically in figure 1. Two network elements NE1, NE2 are connected over a bidirectional path P. Path P is a sequence of optical links and may lead through a number of intermediate network elements, which are not shown for the sake of simplicity. The path is represented by an optical data unit ODUk. Such optical data units are transported in multiplexed form within a framed transport signal, which contains consecutive transport frames that repeat with a predefined, fixed frame rate. The transport frames are termed Optical Transport Unit of size k (OTUk). The optical data units can be for example an ODU0 that repeats approximately every 100 µsec (more precisely every 98,4 µsec according to ITU-T recommendation G.709, table 7-4).

Each ODUk has an overhead section which includes a path monitoring (PM) field as described in ITU-T G.709 chapter 15.8.2.1 and figure 15-13. The PM field contains a subfield for path delay measurement (DMp).

It is assumed in figure 1 that network element NE1 starts a delay measurement by inserting a request signal REQ into the delay measurement subfield. Upon receipt, network element NE2 replies to the requested path measurement by inserting a reply message REP into the delay measurement subfield of the next ODUk in reverse direction. Network element NE1 measures the time difference between inserting the request message REQ and receipt of the reply message REP.

According to G.709, the DMp signal consists of a constant value (0 or 1) that is inverted at the beginning of a two-way delay measurement test. The transition from 0→1 in the sequence ...0000011111..., or the transition from 1→0 in the sequence ... 1111100000... represents the path delay measurement start point and corresponds to the request message REQ in figure 1. The new value of the DMp signal is maintained until the start of the next delay measurement test.

This DMp signal is inserted by the DMp originating network element NE1 and sent to the far-end network element NE2. This far-end network element NE2 loops back the inverted DMp signal towards the originating network element NE1. The looped-back, inverted DMp signal corresponds to the reply message REP in figure 1.

The originating network element NE1 measures the number of frame periods between the moment the DMp signal value is inverted and the moment this inverted DMp signal value is received back from the far-end network element NE2 to determine a round trip delay.

Since bidirectional paths are typically symmetric in the two directions, the round trip delay equals twice the path delay. For other applications, only the total round trip delay as such is needed, so that theoretically possible asymmetries are not relevant.

Apparently, an inversion of the DMp signal in reverse direction can be done only when the appropriate ODUk/ODUkT overhead position is sent out in backward direction, which can take up to 100 µsec for an ODU0. This causes a relatively low granularity of the delay measurement and high jitter of up to 100 µsec.

Since the looping back network element NE2 knows the relative phase difference between forward and backward ODUk frames at the time the inversion is detected in forward direction, it can compute the time needed until the inversion is inserted into the backward direction.

Therefore, according to the present embodiment, network element NE2 sends in addition to or as part of the reply message REP a value indicating the time between reception of the inversion in forward direction and insertion of the inversion into reverse direction.

This value can be for example a one byte value, which specifies the insertion time in n times 0,5 µsec, allowing to specify any time between 0 and 128 µsec with 0,5 µsec granularity. In the preferred embodiment, however, the value n is a two byte value which indicates the insertion time with a granularity of in n times 0,1 µsec.

The value that indicates the insertion time can in principle be sent through any available channel. For example, the value can use a reserved field in the ODU overhead, which is available for proprietary or future use. However, it is preferable to re-use the existing DM subfield for this purpose. The DM subfield has a length of one bit per ODU, separately for path and for path segment delay measurements, and repeats every ODU. Thus, the DM subfields from consecutive ODUs can be used for the transport of the insertion time value.

In order to ensure backwards compatibility, the following changes to the existing delay measurement protocol in the DM subfield are proposed:
No change of protocol in forward direction, i.e. towards the looping NE.

In backward direction
- the inverted pattern is sent as usual for 256 bits constantly (other values than 256 could be chosen as long as the value is fixed),
- followed by the two byte value indicating the time between reception of the inversion in forward direction and insertion of the inversion into backward direction (specified in units of 0,1 µsec),
- followed by a one-byte checksum of the previous byte to ensure reliability against bit errors,
- followed by the constant inverted pattern identical to the first 256 bits after inversion.

The proposed protocol is backward compatible in all mixed scenarios of network elements supporting and not supporting the protocol amendment:
- In case the triggering network element does not support this feature it simply ignores the two byte time value and following checksum inserted by the looping back network element, thus giving a delay measurement with current G.709 precision.
- In case the looping back network element does not support this feature it does not insert the time value and checksum. This is detected by the triggering network element based on checksum mismatch, so it will not use the time value and provide again a measurement result with current G.709 precision. In addition, it can indicate to the user of the delay measurement that the measurement result has today's imprecision constraints.

Figure 2 shows schematically the insertion time for three measurement cycles. Network node NE2 receives frame F1 with the DMp bit inverted, indicating a request for a delay measurement. The receipt of the inverted DMp bit starts the determination of the insertion time. The next frame in reverse direction RF1 is sent at a time t1 thereafter and network element NE2 inverts the DMp byte of RF1 accordingly. The insertion time t1 is communicated to the originating network element NE1, hence.

Some time later, network element NE2 receives another frame F2 having its DMp byte inverted again, thus triggering a second delay measurement. Due to the asynchronous nature of the two directions of bidirectional paths in optical signals, the frame phase of the next frame in reverse direction RF2 has become larger, now. The insertion time t2 until the next DMp can be inverted in reverse direction is communicated again to originating network node NE1.

Even some time later, network node NE2 receives a frame F3 with its DMp byte inverted again. In reverse direction, the last frame RF3a has just been sent, so that the invertion in reverse direction can only be made in the next frame RF3b. The insertion time t3 is now close to the duration of one frame length, i.e. close to 100 µsec for an ODU0.

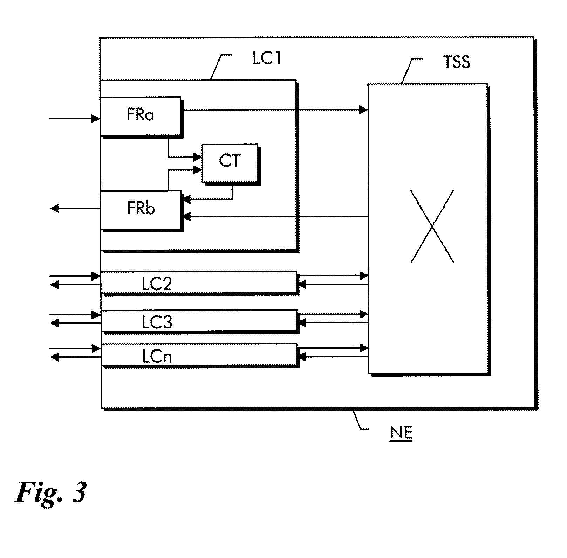

Figure 3 shows an embodiment for a network node NE capable of supporting the above described delay measurement. The network node NE has a number of line cards LC1-LCn for optical transport signals and a switch matrix TSS capable of switching optical data units ODUk in time and space domain between any of the line cards LC1-LCn. Line cards contain input port and corresponding output port for a bidirectional link.

Line card LC1 is shown exemplarily in more detail. It contains a framer FRa for received signals and a framer FRb for transmit signals. A start/stop counter CT is used to determine the insertion time for delay measurement signals. When an ODUk is received which has its DMp byte inverted, a trigger is sent from framer FRa to start counter CT. As a consequence, the DMp byte in the next transmit frame will be inverted by framer FRb. When this happens, framer FRb gives a second trigger to stop counter CT. The count value of counter CT determines the insertion time, which will be inserted by framer FRb 256 frames later in reverse direction towards the initiating network node.

Counter CT can have the same count granularity that is used to indicate the insertion time and can then be directly used as insertion time value. Otherwise, it must be scaled to the appropriate granularity of the insertion time value.

While the present embodiment uses the delay measurement subfield DMp of the path monitoring field, the same can be applied also to the delay measurement subfield DMti, i=1 to 6, of any of the six tandem connection monitoring overhead fields TCMi, i=1 to 6 within the ODUk overhead, see ITU-T G.709 chapter 15.8.2.2.

Since the delay measurement subfield is always in the same position within each subsequent frame, the insertion delay can be determined as the relative frame phase between frames in receive and transmit directions. The start/stop counter can therefore be triggered also through other overhead bytes of the ODUk of which the delay is measured. Due to the consecutive nature of frames in a framed transport signal , it is also possible to use as insertion time the relative frame phase of the previous frame.

The delay measurement can be implemented with conventional network nodes using the controllers residing on the respective line cards for controlling functionality of just these line cards. Alternatively, the delay measurement can also be implemented using a central controller or a shelf controller of the network nodes, or in cooperation between two or more controllers of the network nodes.

The described method allows more precise measurement of delays in OTN networks, with greatly reduced measurement jitter and improved granularity. The resulting improvements can avoid route flapping in dynamic networks with latency based routing, plus improved options to characterize delay properties of network elements and their components.

The high precision delay measurement will also enable use of OTN paths for mobile backhauling between remote radio equipment and radio equipment control using the Common Public Radio Interface (CPRI) defined through by the CPRI industry consortium, which requires tight delay control.

The above described delay measurement can also be used for simplified calibration and characterization of network element delay properties, including FEC implementations, transfer delays through equipment components such as mappers, switching matrices etc.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A delay measurement method of a path (P) or path segment through a transport network, comprising
- at an originating network node (N1) inserting a delay measurement request signal (REQ) into an overhead subfield of a first data unit and transmitting said first data unit over said path (P) or path segment to a far-end network node (NE2) as part of framed transport signals;
- at said far-end network node (NE2), upon detection of said delay measurement request (REQ), inserting a delay measurement reply signal (REP) into an overhead subfield of a second data unit and transmitting said second data unit back to said originating network node (NE1) using framed transport signals in reverse direction;
- at said originating network node (NE1) determining a response time difference between the insertion of said delay measurement request signal (REQ) and receipt of said delay measurement reply signal (REP);
further comprising:
- at said far-end network node (NE2), determining an insertion time value indicative of a time difference (t1, t2, t3) between receipt of said delay measurement request signal (REQ) and insertion of said delay measurement reply signal (REP) in reverse direction and communication said insertion time value to said originating network node; and
- at said originating network node (NE1) determining a delay value for said path (P) or path segment from said determined response time difference and said received insertion time value.

2. A method according to claim 1, wherein a constant value is transmitted in said overhead subfield of subsequent data units and wherein to transmit said delay measurement request signal or said delay measurement reply signal, said constant value is inverted.

3. A method according to claim 2, wherein said far-end network node (NE2) sends the inverted constant value for a predefined number of subsequent data units followed by one or more data units carrying said insertion time value in said overhead subfield.

4. A method according to claim 3, wherein said far-end network node (NE2) after insertion of said time value sends a checksum value in said overhead subfield of a subsequent data unit.

5. A method according to claim 1, wherein said insertion time value is determined as a relative frame phase between transport frames in receive (F1, F2; F3) and transmit (RF1, RF2, RFb) direction.

6. A network node (NE1) for a transport network, comprising at least one input and one output for receiving and transmitting, respectively, framed transport signals carrying one or more data units; wherein said network node (NE1) is adapted to perform a delay measurement of a path (P) or path segment by
- inserting a delay measurement request signal (REQ) into an overhead subfield of a first data unit and transmitting said first data unit as part of a framed transport signal at said output;
- receiving at said input a framed transport signal in reverse direction transporting a second data unit having within an overhead subfield a delay measurement reply signal (REP);
- determining a response time difference between the insertion of said delay measurement request signal (REQ) and receipt of said delay measurement reply signal (REP);
- receiving an insertion time value indicative of a time difference (t1, t2, t3) between a receipt of said delay measurement request signal (REQ) and an insertion of said delay measurement reply signal (REP) at a remote network node (NE2); and
- determining a delay value for said path (P) or path segment from said determined response time difference and said received insertion time value.

7. A network node (NE1) according to claim 6 being adapted to detect when no insertion time value is received and if so, to determine said value for said path or path segment from said determined response time difference, only.

8. A network node (NE1) according to claim 7 being adapted to detect a missing insertion time value by means of a checksum check.

9. A network node (NE1) according to claim 7 being adapted to provide in the case of a missing insertion time value along with said delay value an indication that said delay value is of a lower precision.

10. A network node (NE2) for a transport network, comprising at least one input and one output for receiving and transmitting, respectively, framed transport signals carrying one or more data units; wherein said network node (NE2) is adapted to support a delay measurement of a path (P) or path segment by
- receiving at said input a framed transport signal transporting a first data unit having within an overhead subfield a delay measurement request signal (REQ);
- upon detection of said delay measurement request signal (REQ), inserting a delay measurement reply signal (REP) into an overhead subfield of a second data unit and transmitting said second data unit at said output as part of a framed transport signal in reverse direction;
- determining an insertion time value indicative of a time difference (t1, t2, t3) between receipt of said delay measurement request signal (REQ) and insertion of said delay measurement reply signal (REP) in reverse direction and communicating said insertion time value to an originating network node (NE1).
